(19) Europäisches Patentamt / European Patent Office / Office européen des brevets

(11) **EP 2 009 057 B1**

(12) **EUROPEAN PATENT SPECIFICATION**

(45) Date of publication and mention
of the grant of the patent:
**08.06.2011  Bulletin 2011/23**

(21) Application number: **07741401.9**

(22) Date of filing: **11.04.2007**

(51) Int Cl.:
*C08L 69/00* (2006.01)     *C08J 5/00* (2006.01)
*C08K 3/38* (2006.01)     *C08K 5/00* (2006.01)
*C08K 9/04* (2006.01)     *C08L 83/06* (2006.01)

(86) International application number:
**PCT/JP2007/057965**

(87) International publication number:
**WO 2007/119742 (25.10.2007 Gazette 2007/43)**

(54) **POLYCARBONATE RESIN COMPOSITION AND MOLDED PLATE OBTAINED THEREFROM**

POLYCARBONAT-HARZZUSAMMENSETZUNG UND DARAUS HERGESTELLTE FORMPLATTE

FORMULE DE RÉSINE POLYCARBONATE ET PLAQUE MOULÉE OBTENUE À PARTIR DE LADITE FORMULE

(84) Designated Contracting States:
**DE FR IT**

(30) Priority: **14.04.2006   JP 2006112428**

(43) Date of publication of application:
**31.12.2008   Bulletin 2009/01**

(73) Proprietor: **Idemitsu Kosan Co., Ltd.
Chiyoda-ku
Tokyo 100-8321 (JP)**

(72) Inventor: **NAKAE, Mitsugu
Ichihara-shi, Chiba 299-0193 (JP)**

(74) Representative: **Gille Hrabal Struck Neidlein Prop Roos
Patentanwälte
Brucknerstrasse 20
40593 Düsseldorf (DE)**

(56) References cited:
**JP-A- 06 234 940        JP-A- 09 236 702
JP-A- 2000 178 428        JP-A- 2002 220 526
JP-A- 2004 162 020        JP-A- 2006 199 850
US-A1- 2003 173 546        US-A1- 2004 131 845**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a polycarbonate resin composition and a molded plate obtained therefrom, and more specifically, to a polycarbonate resin composition which shields a mid-infrared region, is excellent in thermal stability and transparency, and is suitable as a building material (exterior), a resin window, and a window part for electrical and electronic uses and a molded plate obtained therefrom.

Background Art

A film and a sheet which can inhibit the temperature rise caused by the sunlight, an infrared lamp, or the like by effectively cutting infrared rays are known.

A polycarbonate is excellent in impact resistance, thermal resistance, and transparency and is widely used as a transparent plate for a building material and the like, and a transparent plate including the polycarbonate compounded with an infrared absorbing material is known.

However, such a transparent plate causes a deterioration of a resin, which attributes to the infrared absorbing material, a deterioration of the infrared absorbing material itself, and also a dispersion failure of the infrared absorbing material. Thus, it has been difficult to obtain a heat ray shielding plate which shields a mid-infrared region (wavelength region of 1,500 to 2, 500 nm) and is excellent in transparency and thermal stability.

Therefore, the following methods are employed for obtaining the transparent plate: a method of laminating another resin containing a mid-infrared shielding material on a surface layer of a polycarbonate sheet by co-extrusion; a method of attaching a film on which a coating including an infrared absorbing material is applied to the polycarbonate sheet; and the like.

However, those sheet molded products have a problem in that the production thereof leads to high cost, because the products have no degree of freedom in shape thereof and require a process of co-extrusion or processes of applying the coating and attaching the film.

Consequently, a polycarbonate resin composition which can shield a mid-infrared region and from which the molded product can be obtained by an extrusion molding or an injection molding is demanded.

For example, a polycarbonate resin composition obtained by a method of making the polycarbonate resin composition contain fine particles of antimony-doped tin oxide (ATO) or fine particles of tin-doped indium oxide (ITO) along with a dispersant is proposed (for example, refer to Patent Documents 1 and 2). As the dispersant, stearic acid and glycerin monostearate having low-molecular weight are exemplified. However, in the polycarbonate resin composition obtained by the above method, the transparency (haze: cloudiness) and the thermal stability thereof are not satisfactory; thus, the polycarbonate resin composition is impracticable.

Patent Document 1: JP 2000-234066 A
Patent Document 2: JP 2000-178428 A

Disclosure of the Invention

An object of the present invention is to provide: a polycarbonate resin composition which shields a mid-infrared region and is excellent in transparency and thermal stability; and a molded plate obtained therefrom.

The inventors of the present invention have intensively studied to achieve the above object. As a result, it has been found that the above problem can be solved by a polycarbonate resin composition and a molded plate obtained therefrom, the composition including the following ingredients in the following specific proportion: a polycarbonate; fine particles of antimony-doped tin oxide (ATO) treated with a polymeric dispersant and/or fine particles of tin-doped indium oxide (ITO) treated with a polymeric dispersant; and a reactive silicone compound having one or more alkoxy groups and a phenyl group in a molecule thereof. Thus, the present invention has been accomplished.

That is, the present invention provides the following items (1) to (9).

(1) A polycarbonate resin composition, including: 100 parts by mass of a polycarbonate (A) as a reference value; 0.03 to 1 part by mass of fine particles of antimony-doped tin oxide (ATO) treated with a polymeric dispersant and/or fine particles of tin-doped indium oxide (ITO) treated with a polymeric dispersant (B) with respect to 100 parts by mass of the polycarbonate (A); and 0.03 to 1 part by mass of a reactive silicone compound having one or more alkoxy groups and a phenyl group in a molecule thereof (C) with respect to 100 parts by mass of the polycarbonate (A).
(2) A polycarbonate resin composition according to the item (1), further including 0.0001 to 1 part by mass of an antioxidant (D) with respect to 100 parts by mass of the polycarbonate (A).

(3) A polycarbonate resin composition according to the item (1) or (2), further including 0.0001 to 1 part by mass of an ultraviolet absorber (E) with respect to 100 parts by mass of the polycarbonate (A).

(4) A polycarbonate resin composition according to any one of the items (1) to (3), further including 0.001 to 0.1 part by mass of a lanthanum hexaboride-containing heat ray shielding material (F) with respect to 100 parts by mass of the polycarbonate (A).

(5) A molded plate, which is formed by subjecting the polycarbonate resin composition according to any one of the items (1) to (3) to an injection molding or an extrusion molding.

(6) A molded plate according to the item (5), in which the molded plate includes a light ray transmittance of less than 20% in a region having a wavelength of 1,500 to 2,500 nm and a haze of less than 5%.

(7) A molded plate according to the item (5) or (6), in which the molded plate includes a total light ray transmittance (C light source) of 15% or more.

(8) A molded plate, which is formed by subjecting the polycarbonate resin composition according to the item (4) to an injection molding or an extrusion molding, in which the molded plate includes a light ray transmittance of less than 20% in a region having a wavelength of 1,500 to 2, 500 nm, a light ray transmittance of less than 20% in a region having a wavelength of 1,000 nm, and a haze of less than 5%.

(9) A molded plate according to the item (8), in which the moldedplate includes a total light ray transmittance (C light source) of 15% or more.

According to the present invention, a polycarbonate resin composition which shields a mid-infrared region and is excellent in transparency and thermal stability and a molded plate obtained therefrom can be provided.

Best Mode for carrying out the Invention

[(A) Polycarbonate]

A polycarbonate (A) to be used in the present invention is not particularly limited, and various polycarbonates can be exemplified. In general, an aromatic polycarbonate produced by a reaction between a dihydric phenol and a carbonate precursor can be used. The aromatic polycarbonate produced from the dihydric phenol and the carbonate precursor by a solution method or a melting method, i.e., an interfacial polycondensation method reacting the dihydric phenol with phosgene or an ester exchange method reacting the dihydric phenol with diphenyl carbonate and the like can be used.

As the dihydric phenol, various examples are given. In particular, examples thereof include: bis(hydroxyphenyl) alkane-based dihydric phenols such as 2,2-bis(4-hydroxyphenyl)propane [bisphenol A], bis(4-hydroxyphenyl)methane, 1,1-bis(4-hydroxyphenyl) ethane, and 2,2-bis(3,5-dimethyl-4-hydroxyphenyl)propane; 4,4'-dihydroxydiphenyl; bis(4-hydroxyphenyl)cycloalkane; bis(4-hydroxyphenyl)oxide; bis(4-hydroxyphenyl)sulfide; bis(4-hydroxyphenyl)sulfone; bis(4-hydroxyphenyl)sulfoxide; and bis(4-hydroxyphenyl)ketone.

As the dihydric phenol, bis(hydroxypheyl)alkane-based dihydric phenols are preferred and a dihydric phenol formed from bisphenol A as a main raw material is particularly preferred.

As the carbonate precursor, a carbonyl halide, a haloformate or carbonyl ester, and the like are given. Specifically, phosgene, dihaloformate which is a dihydric phenol, diphenyl carbonate, dimethyl carbonate, and diethyl carbonate are given. Examples of the dihydric phenol include hydroquinone, resorcin, and catechol. One kind of those dihydric phenols may be used alone, or two or more kinds thereof may be used in mixture.

The polycarbonate (A) used in the present invention may contain an unsealed hydroxyl-terminal, and another terminal may be sealed with a terminal sealant which is regularly used for producing the polycarbonate.

Examples of the terminal sealant include phenol, p-cresol, p-t-butylphenol, p-t-octylphenol, p-cumylphenol, p-nonylphenol, p-t-amylphenol, bromophenol, tribromophenol, and pentabromophenol.

The polycarbonate (A) used in the present invention may have a branched structure or the like.

As a branching agent, 1,1,1-tris(4-hydroxyphenyl)ethane, $\alpha,\alpha',\alpha''$-tris(4-hydroxyphenyl)-1,3,5-triisopropylbenzene, fluoroglycine, trimellitic acid, isatinbis (o-cresol), and the like are exemplified.

Further, in order to adjust the molecular weight, phenol, p-t-butylphenol, p-t-octylphenol, p-cumylphenol, or the like is used.

A viscosity average molecular weight (Mv) of the polycarbonate (A) used in the present invention is preferably in a range of 10,000 to 50, 000. When the viscosity average molecular weight is 10,000 or more, sufficient strength and transparency can be obtained. When the viscosity average molecular weight is 50,000 or less, sufficient transparency can be obtained and molding processability is improved. The viscosity average molecular weight is more preferably in a range of 12,000 to 40,000 and particularly preferably in a range of 14,000 to 30,000.

The viscosity average molecular weight (Mv) is calculated by the following equation, after a limiting viscosity [η] is obtained by determining a viscosity of methylene chloride solution at 20°C by using a Ubbelohde type viscometer.

$$[\eta] = 1.23 \times 10^{-5} Mv^{0.83}$$

[(B) ATO and/or ITO treated with polymeric dispersant]

A component (B) to be used in the present invention is fine particles of antimony-doped tin oxide (ATO) treated with a polymeric dispersant and/or fine particles of tin-doped indium oxide (ITO) treated with a polymeric dispersant.

As the fine particles of antimony-doped tin oxide (ATO), ATO which is a solid solution of tin oxide and antimony oxide and in which an antimony content is generally in a range of 1 to 20 mass% and more preferably in a range of 5 to 20 mass% with respect to ATO is exemplified.

As the fine particles of tin-doped indium oxide (ITO), ITO in which a content of tin atoms is generally in a range of 30 mass% or less and more preferably in a range of 1 to 20 mass% with respect to ITO is exemplified.

An average primary particle diameter of each of ATO and ITO is generally 0.001 to 0.15 $\mu$m. When the average primary particle diameter is in the above range, the haze of the molded plate does not increase, which is suitable. The average primary particle diameter is preferably 0.001 to 0.1 $\mu$m.

Those ATO and ITO may be subjected to, if required, knownsurface treatments such as a silane coupling agent treatment and silica coating.

As the polymeric dispersant, a polyacrylate-based dispersant, a polyester-based dispersant, a polyurethane-based dispersant, a polyether-based dispersant, a polyester urethane-based dispersant, and the like are exemplified.

Examples of the polyacrylate-based dispersant include "SN THICKENER A-850 and SN THICKENER A-815" (both of which are trade names) manufactured by SAN NOPKO LIMITED, "EFKA4500 and EFKA4530" (both of which are trade names) manufactured by EFKA ADDITIVES B.V., "Disperbyk-116" (trade name) manufactured by BYK-Chemie, and "DISPARLON DN900" (trade name) manufactured by Kusumoto Chemicals, Ltd.

Examples of the polyester-based dispersant include "Solsperse 22000, Solsperse 24000SC, Solsperse 24000GR, Solsperse 26000, Solsperse 27000, Solsperse 28000, Solsperse 36000, Solsperse 36600, and Solsperse 38500" (all of which are trade names) manufactured by Avecia, and "DISPARLONDA70350, DISPARLONDA705, DISPARLONDA725, DISPARLON DA860, DISPARLON DA873N, and DISPARLON DA375" (all of which are trade names) manufactured by Kusumoto Chemicals, Ltd.

Examples of the polyurethane-based dispersant include "EFKA4046, EFKA4047, and EFKA4520" (all of which are trade names) manufactured by EFKA ADDITIVES B.V. and "TEXAPHOR P60, TEXAPHOR P63, and TEXAPHOR P610" (all of which are trade names) manufactured by Cognis.

Examples of the polyether-based dispersant include "SN THICKENERA-801, SN THICKENERA-802, SNTHICKENERA-803, SN THICKENER A-804, and SN THICKENER A-806" (all of which are trade names) manufactured by SAN NOPKO LIMITED and "DISPARLON DA234 and DISPARLON DA325" (both of which are trade names) manufactured by Kusumoto Chemicals, Ltd.

One kind of those polymeric dispersants may be used alone, or two or more kinds thereof may be used in mixture.

As those polymeric dispersants, the polyacrylate-based dispersant and the polyester-based dispersant are preferable from the viewpoints of thermal stability and hydrolysis resistance.

Note that the polymeric dispersant at room temperature in any of the liquid, solid, and gel forms can be used.

The component (B) to be used in the present invention is generally obtained as a dispersant by a treatment involving compounding a polymeric dispersant to ATO and/or ITO. The treatment method is not particularly limited, and the following methods are exemplified.

For example, the following methods are given: a method including compounding a polymeric dispersant to ATO,and/or ITO and mixing the resultant under stirring uniformly; and a method including compounding a polymeric dispersant dissolved in a solvent to ATO and/or ITO dispersed in a solvent, mixing the resultant under stirring, and then heat flashing the solvent to thereby remove the solvent. Note that, in the case of the method where the solvent is used, the substances may be mixed under being stirred while the dispersion of the particles is maintained with a wet bead mill or the like.

In those methods, a compounding amount of the polymeric dispersant is generally in a range of 0.3 to 10 parts by mass with respect to 1 part by mass of ATO and/or ITO. When the compounding amount is 0.3 part by mass or more, ATO and/or ITO can be dispersed uniformly into the polycarbonate resin composition without causing agglomeration and the like. Further, the haze does not increase, so the transparency becomes satisfactory. When the compounding amount is 10 parts by mass or less, the decreases in thermal stability and mechanical physical properties of the resin can be suppressed. The compounding amount of the polymeric dispersant is preferably in a range of 0.5 to 7 parts by mass.

As the treatment method, there is exemplified a method including: polymerizing a polymerizable monomer such as methylmethacrylate or the like in a state where ATO and/or ITO are/is dispersed in the monomer; and dispersing ATO and/or ITO into the obtained polymer. In the case of using the above method, a compounding amount of the monomer is preferably adjusted so that a compounding amount of the polymer obtained from the monomer is in the range of the compounding amount of the polymeric dispersant mentioned above.

In the present invention, a compounding amount of the component (B) is generally 0.03 to 1 part by mass with respect to 100 parts by mass of the polycarbonate (A). When the compounding amount is 0.03 part by mass or more, a shielding effect in a mid-infrared region is satisfactorily exhibited. When the compounding amount is 1 part by mass or less, mechanical physical properties and thermal stability are improved, and the haze does not increase, so the transparency becomes satisfactory. The compounding amount of the component (B) is preferably in a range of 0.03 to 0.5 part by mass.

[(C) Reactive silicone compound]

A reactive silicone compound having one or more alkoxy groups and a phenyl group in a molecule thereof (C) to be used in the present invention is preferably a reactive silicone compound having a form in which a phenyl group is bound to a silicon atom in the main chain of the molecule of the compound and having one or more alkoxy groups at a terminal or a side chain of the molecule thereof. As a specific compound, a reactive silicone compound having a main chain formed of a polymethylphenyl siloxane structure or a polydiphenyl siloxane structure and having one or more alkoxy groups at a terminal or a side chain of the molecule thereof is exemplified.
Further, as the silicone compound, a number average molecular weight thereof is preferably 200 or more, and more preferably in a range of 500 to 5,000,000. As a form of the silicone compound, any suitable forms of oil, varnish, gum, powder, pellets, and the like can be used.
Further, as the silicone compound, a refractive index thereof is preferably in a range of 1.45 to 1.6. When the refractive index is in the above range, the haze does not increase, so the transparency becomes satisfactory, which is suitable. Examples of the component (C) having the above refractive index include "KR511" (trade name, refractive index = 1.518) manufactured by Shin-Etsu Chemical Co., Ltd. and "DC3037" (trade name, refractive index = 1.49) manufactured by Dow Corning Toray Co., Ltd.
As the component (C), one kind may be used alone, or two or more kinds may be used in combination. Also in the case where the component (C) is a mixture, the mixture can still be used as long as the refractive index of the mixture is in a range of 1.45 to 1.6.
In the present invention, a compounding amount of the component (C) is generally in a range of 0.03 to 1 part by mass with respect to 100 parts by mass of the polycarbonate (A). When the compounding amount of the component (C) is in the above range, sufficient thermal stability is obtained, and in addition, silver is not generated at the time of molding, which makes an external appearance of the molded product satisfactory. The compounding amount of the component (C) is preferably in a range of 0.05 to 0.6 part by mass.
In the polycarbonate resin composition of the present invention, another silicone compound can be contained therein, if required, together with the reactive silicone compound of the component (C), as long as the object of the present invention is not adversely affected.
Examples of the another silicone compound include "SH1107 (refractive index = 1.396), SR2402, BY16-160, and BY16-161" (all of which are trade names, alkyl hydrogen silicone) manufactured by Dow Corning Toray Co., Ltd. A refractive index of the another silicone compound is preferably in the above range, and also, in the case where the another silicone compound is mixed with the component (C), the another silicone compound can still be used as long as the refractive index of the mixture is in the above range.

[(D) Antioxidant]

In the polycarbonate resin composition of the present invention, an antioxidant (D) canbe compounded if required. As the antioxidant (D), a phosphorus-based antioxidant and a phenol-based antioxidant are suitably used. One kind of those may be used alone, or two or more kinds thereof may be used in combination.
Examples of the phosphorus-based antioxidant include triphenyl phosphite, diphenylnonyl phosphite, tris(2,4-di-t-butylphenyl)phosphite, trisnonylphenyl phosphite, diphenylisooctyl phosphite, 2,2'-methylenebis(4,6-di-t-butylpheyl)octyl phosphite, diphenylisodecyl phosphite, diphenylmono(tridecyl)phosphite, 2,2'-ethylidenebis(4,6-di-t-butylphenol)fluorophosphite, phenyldiisodecyl phosphite, phenyldi(tridecyl)phosphite, tris(2-ethylhexyl)phosphite, tris(isodecyl)phosphite, tris(tridecyl)phosphite, dibutyl hydrogen phosphite, trilauryltrithio phosphite, tetrakis(2,4-di-t-butylphenyl)-4,4'-biphenylenediphosphonite, 4,4'-isopropylidenediphenol dodecyl phosphite, 4,4'-isopropylidenediphenol tridecyl phosphite, 4,4'-isopropylidenediphenol tetradecyl phosphite, 4,4'-isopropylidenediphenol pentadecyl phosphite, 4,4'-butylidenebis (3-methyl-6-t-butylphenyl)ditridecyl phosphite, bis(2,4-di-t-butylpheyl)pentaerythritol diphosphite, bis(2,6-di-t-butyl-4-methylphenyl)pentaerythritol diphosphite, bis(nonylphenyl)pentaerythritol diphosphite, distearyl-pentaerythritol diphosphite, phenylbisphenol A pentaerythritol diphosphite, tetraphenyl dipropyleneglycol diphosphite, 1,1,3-tris(2-methyl-4-di-tridecylphosphite-5-t-butylphenyl)but ane, 3,4,5,6-dibenzo-1,2-oxaphosphane, triphenylphosphine, diphenylbutylphosphine, diphenyloctadecylphosphine, tris-(p-tolyl)phosphine, tris-(p-nonylphenyl)phosphine, tris-(naphthyl)phosphine, diphenyl-(hydroxymethyl)-phosphine, diphenyl-(acetoxymethyl)-phosphine, diphenyl-(β-ethylcarboxyethyl)-phosphine, tris-(p-chlorophenyl)phosphine, tris-(p-fluorophenyl)phosphine, diphenylbenzylphosphine, diphenyl-β-cyanoethylphosphine, diphenyl-(p-hydroxyphenyl)-phosphine, diphenyl-1,4-dihydroxyphenyl-2-phosphine, and phenylnaphthylbenzylphosphine.

Examples of the phenol-based antioxidant include hindered phenols such as n-octadecyl-3-(3,5-di-t-butyl-4-hydroxyphenyl)propionate, 2,6-di-t-butyl-4-methylphenol, and 2,2'-methylenebis(4-methyl-6-t-butylphenol)pentaerythrityl-tet rakis[3-(3,5-di-t-butyl-4-hydroxyphenyl)propionate].

Of those antioxidants (D), an antioxidant having a pentaerythritol diphosphite structure, such as bis(2,6-di-tert-butyl-4-methylphenyl)pentaerythritol diphosphite and bis(2,4-di-tert-butylpheyl)pentaerythritol diphosphite, and triphenylphosphine are preferred.

In the present invention, a compounding amount of the antioxidant (D) is generally in a range of 0.0001 to 1 part by mass with respect to 100 parts by mass of the polycarbonate (A). When the compounding amount is 0.0001 part by mass or more, the thermal stability at the time of molding becomes satisfactory, and a color tone is stabilized. When the compounding amount is 1 part by mass or less, a balance between the effect and economic efficiency becomes satisfactory. The compounding amount of the antioxidant (D) is preferably in a range of 0.001 to 0.6 part by mass.

[Ultraviolet absorber (E)]

In the polycarbonate resin composition of the present invention, an ultraviolet absorber (E) can be compounded if required. As the ultraviolet absorber (E), various compounds such as benzotriazole-based, salicylate-based, malonate-based, oxalylalanine-based, triazine-based, benzophenone-based, and cyanoacrylate-based compounds are exemplified. One kind of those may be used alone, or two or more kinds thereof may be used in combination.

Examples of the benzotriazole-based compounds include 2-(2'-hydroxy-5'-methylphenyl)benzotriazole, 2-(2'-hydroxy-5'-t-butylphenyl)benzotriazole, 2-(2'-hydroxy-5'-t-octylphenyl)benzotriazole, 2-(2'-hydroxy-3',5'-di-t-butylphenyl)benzotriazole, 2-(2'-hydroxy-3',5'-di-amylphenyl)benzotriazole, 2-(2'-hydroxy-3'-dodecyl-5'-methylphenyl)benzotriazole, 2-(2'-hydroxy-3',5'-dicumylphenyl)benzotriazole, and 2,2'-methylenebis[4-(1,1,3,3-tetramethylbutyl)-6-(2H-benzotria zole-2-yl)phenol].

Examples of the salicylate-based compounds include phenyl salicylate, p-t-butylphenyl salicylate, and p-octylphenyl salicylate.

Examples of the malonate-based compounds include benzylidenebisdiethyl malonate and 4-methoxyphenyl-methylene-dimethylester.

An example of the oxalylalanine-based compound includes an oxalylalanine compound containing a hydrocarbon group having 1 to 12 carbon atoms.

In the present invention, a compounding amount of the ultraviolet absorber (E) is generally 0.0001 to 1 part by mass with respect to 100 parts by mass of the polycarbonate (A). When the compounding amount is 0.0001 part by mass or more, weatherability becomes satisfactory, so a color change at the time of outdoor usage is suppressed. When the compounding amount is 1 part by mass or less, a balance between the effect and economic efficiency becomes satisfactory. The compounding amount of the ultraviolet absorber (E) is preferably in a range of 0.01 to 0.8 part by mass.

[(F) Lanthanum hexaboride-containing heat ray shielding material]

In the polycarbonate resin composition of the present invention, a lanthanum hexaboride-containing heat ray shielding material (F) can be compounded if required. As the lanthanum hexaboride-containing heat ray shielding material (F), a material in which lanthanum hexaboride fine particles are dispersed in a polymeric dispersant can be exemplified, and a specific example thereof includes "KHDS-06" (trade name) manufactured by Sumitomo Metal Mining Co., Ltd. The lanthanum hexaboride-containing heat ray shielding material has properties of shielding light having a wavelength of around 1, 000 nm by reflection and absorption and transmitting light having a wavelength of 380 to 780 nm (visible light region). The details of lanthanum hexaboride-containing heat ray shielding material is described in JP 2003-277045 A and JP 2003-327717 A.

In the present invention, a compounding amount of the lanthanum hexaboride-containing heat ray shielding material (F) is generally 0.001 to 0.1 part by mass with respect to 100 parts by mass of the polycarbonate (A). When the compounding amount is 0.001 part by mass or more, the absorption effect of the light having a wavelength of around 1,000 nm is sufficiently obtained, and when the compounding amount is 0.1 part by mass or less, a decrease of a light ray transmittance in the visible light region can be suppressed. The compounding amount of the lanthanum hexaboride-containing heat ray shielding material (F) is preferably in a range of 0.003 to 0.07 part by mass.

[Additives]

In the polycarbonate resin composition of the present invention, various additives can also be compounded if required, as long as the object of the present invention is not adversely affected. Examples of the additive include: coloring agents such as a dye and a pigment, which are added from the viewpoint of providing any suitable color tones; an antistat; a mold releasing agent; a plasticizer; an antibacterial agent; and a compatibilizer.

Preferable examples of the coloring agent include a perylene-based dye, a coumarin-based dye, a thioindigo-based dye, an anthraquinone-based dye, a thioxanthone-baseddye, a ferrocyanide, a perynone-based dye, a quinoline-based dye, and a phthalocyanine-based dye.

A compounding amount of those coloring agents is generally in a range of 0.1 to 2,000 mass ppm and more preferably in a range of 0.5 to 200 mass ppm with respect to a total amount of the polycarbonate resin composition. Further, as the coloring agent, carbon fillers such as carbon black are also preferably exemplified.

[Polycarbonate resin composition]

Next, the polycarbonate resin composition of the present invention is obtained by compounding: the components (A), (B), and (C); the components (D), (E), and (F) which are used if required; and the various additives which are used if required, and by melt-kneading the resultant.

The compounding and the kneading can be performed by the method of using machines which are in general use, such as: a ribbon blender, a drum tumbler, and a Henschel mixer for premixing; and a Banbury mixer, a uniaxial screw extruder, a biaxial screw extruder, a multiaxial screw extruder, and a Ko-kneader.

In general, the heating temperature at the time of kneading is appropriately selected from a range of 240 to 300°C. In the molding by melt-kneading, an extrusion molding machine, or a vent-type extrusion molding machine in particular, is preferably used.

[Molded plate using polycarbonate resin composition] The molded plate of the present invention can be produced by melt-kneading the above-mentioned respective components to produce pellets of the polycarbonate resin composition, and subjecting the pellets to preferably an injection molding method or an extrusion molding method.

A molded plate I (in the case of not containing the component (F)) of the present invention generallyhas a light ray transmittance of less than 20% in a region having a wavelength of 1,500 to 2,500 nm. When the light ray transmittance is less than 20%, a sufficient mid-infrared shielding effect is obtained. The light ray transmittance is preferably 15% or less. The molded plate I of the present invention generally has a haze of less than 5%. When the haze is less than 5%, sufficient transparency is obtained. The haze is preferably 4% or less.

Further, the molded plate I of the present invention generally has a total light ray transmittance (C light source) of 15% or more. When the total light ray transmittance is 15% or more, sufficient visibility is obtained, and desired coloring can be performed. The total light ray transmittance (C light source) is a total light ray transmittance which is determined with a C light source.

A molded plate II (in the case of containing the component (F)) of the present invention generally has a light ray transmittance of less than 20% in a region having a wavelength of 1,500 to 2,500 nm. When the light ray transmittance is less than 20%, a sufficient mid-infrared shielding effect is obtained. The light ray transmittance is preferably 15% or less. In addition, the molded plate II of the present invention generally has a light ray transmittance of less than 20% at a wavelength of 1,000 nm. When the light ray transmittance is less than 20%, a sufficient heat ray shielding effect is obtained. The light ray transmittance is preferably 15% or less.

The molded plate II of the present invention generally has a haze of less than 5%. When the haze is less than 5%, sufficient transparency is obtained. The haze is preferably 4% or less.

Further, the moldedplate II of the present invention generally has a total light ray transmittance (C light source) of 15% or more. When the total light ray transmittance is 15% or more, sufficient visibility is obtained, and desired coloring can be performed.

Examples

Hereinafter, the present invention is described more specifically by the following examples and comparative examples, but is in no way limited thereto.

Production Example 1

[Production of ITO treated with polymeric dispersant]

230 g of 20 mass% polymethylmethacrylate (PMMA) toluene solution was added to 100 g of 15 mass% ITO toluene dispersion liquid (manufactured by C.I.Kasei Co., Ltd., ITO average particle diameter: 30 nm) so that the amount of PMMA became 3 parts by mass with respect to 1 part by mass of ITO. The mixture was mixed while being stirred at room temperature (25°C), and then was heated and concentrated at 120°C, whereby a viscous liquid was obtained.

Subsequently, the viscous liquid was dried and then pulverized, whereby 60 g of ITO treated with PMMA was obtained.

Examples 1 to 9, Comparative Examples 1 to 8

[Compounding ingredients]

The kinds of materials used in Examples and Comparative Examples are as follows.

(A) Polycarbonate

(A-1): Polycarbonate (trade name: Toughlon FN2200, manufactured by Idemitsu Kosan Co., Ltd., viscosity average molecular weight: 22,000]

(B) ATO or ITO

(B-1): ATO treated with a polymeric dispersant [trade name: FMDS-874, manufactured by Sumitomo Metal Mining Co., Ltd., a heat ray shielding material formed of 3 parts by mass of polymethylmethacrylate-based dispersant with respect to 1 part by mass of ATO, ATO average particle diameter: 80 nm, content of antimony in ATO: 10 mass%]
(B-2) : ITO treated with the polymeric dispersant (PMMA) which is obtained in the above Production Example 1
(B-3) : Mixture of ATO powder [trade name: T-1, manufactured by JEMCO INC., ATO average particle diameter: 31 nm (average particle diameter of the dispersion liquid)] and monoglyceride stearate (low molecular weight dispersant) (trade name: Rikemal S-100A, manufactured by Riken Vitamin Co., Ltd.)
(B-4) : ATO powder (trade name: T-1, manufactured by JEMCO INC., ATO average particle diameter: 31 nm (average particle diameter of the dispersion liquid))
(B-5): Solvent dispersed ATO (manufactured by JEMCO INC., n-butanol dispersion liquid having ATO concentration of 15 mass%, ATO particle size distribution: 30 nm ($D_{50}$), 84 nm ($D_{90}$), 19 nm ($D_{10}$))
(B-6) : Solvent dispersed ITO (trade name: EI-1, manufactured by JEMCO INC., ethanol dispersion liquid having ITO concentration of 15 mass%, ITO particle size distribution: 68 nm ($D_{50}$), 37 nm ($D_{10}$), 171 nm ($D_{90}$))

(C) Reactive silicone compound

(C-1): Organopolysiloxane having a methoxy group, a phenyl group, and a vinyl group (trade name: KR511, manufactured by Shin-Etsu Chemical Co., Ltd., refractive index = 1.518)
(C-2): Organopolysiloxane having a methoxy group, a phenyl group, and a vinyl group (trade name: DC3037, manufactured by Dow Corning Toray Co., Ltd., refractive index = 1.49)
(C-3) : Organopolysiloxane having a methoxy group and not having a phenyl group (trade name: FZ3517, manufactured by Nippon Unicar Co., Ltd., refractive index = 1.40)

(D) Antioxidant

(D-1): Bis(2,4-di-t-butylphenyl)pentaerythritol diphosphite (trade name: ADK STAB PEP-36, manufactured by Asahi Denka Co., Ltd.)
(D-2) : n-octadecyl-3-(3,5-di-t-butyl-4-hydroxyphenyl)propionate (trade name: IRGANOX 1076, manufactured by Ciba Specialty Chemicals Co., Ltd.)
(D-3): Tris(2,4-di-t-butylphenyl)phosphite (trade name: IRGAFOS 168, manufactured by Ciba Specialty Chemicals Co., Ltd.)
(D-4): Triphenylphosphine (trade name: JC263, manufactured by Johoku Chemical Co., Ltd.)

(E) Ultraviolet absorber

(E-1): Benzotriazole-based ultraviolet absorber (trade name: Kemisorb 79, manufactured by Chemipro Kasei Kaisha, Ltd.)

(F) Lanthanum hexaboride-containing heat ray shielding material

(F-1): KHDS-06 [trade name, manufactured by Sumitomo Metal Mining Co., Ltd., a heat ray shielding material formed of 2.5 parts by mass of polymeric dispersant and 1 part by mass of zirconium oxide (IV) with respect to 1 part by mass of lanthanum hexaboride fine particles (average particle diameter: 70nm)]

(G) Dye or pigment

(G-1) : Anthraquinone-based blue dye (trade name: Diaresin Blue G, manufactured by Mitsubishi Chemical Corporation)
(G-2) : Anthraquinone-based blue dye (trade name: Diaresin Blue N, manufactured by Mitsubishi Chemical Corporation)
(G-3) : Anthraquinone-based red dye (trade name: Sumika Color D4002PR, manufactured by Sumika Color Co., Ltd.)
(G-4): Carbon black (trade name: Mitsubishi Carbon M-100, manufactured by Mitsubishi Carbon Co., Ltd.)

[Production of polycarbonate resin composition and molded plate obtained therefrom]

The compounding ingredients described above were compounded in the compounding amounts shown in Table 1 and Table 2 and dry-blended by a mixer, Super Floater (SFC-50, manufactured by Kawata Mfg Co., Ltd.). Thereafter, the mixture was fed to a uniaxial extruder having a diameter of 50 mm (NVC-50, manufactured by Tanifuji Machine Industries Co. Ltd.), melt-mixed at 280°C, and extruded into strands. The resultant was cut to thereby obtain pellets of polycarbonate resin composition.
Next, the obtained pellets were dried at 120°C for 5 hours and then subjected to injection molding at 280°C using an injection molding machine (IS-150EN, manufactured by TOSHIBA MACHINE CO., LTD.), whereby test pieces (100 × 100 mm and thickness: 5 mm, or 100 × 100 mm and thickness: 2 mm) were produced. Those test pieces were used in the following Tests (2) and (3).

[Physical properties test]

(1) Thermal stability

The pellets produced above were dried and subjected to injection molding at 340°C.using an injection molding machine (EC40N, manufactured by TOSHIBA MACHINE CO., LTD.), whereby test pieces (80 × 45 mm, thickness: 3.2 mm) for evaluating the thermal stability were produced. The obtained test piece was determined for an yellowness index (initial YI) and a viscosity average molecular weight (initial Mv). Further, a test piece obtained in the same way was determined, after retention for 15 minutes in the molding machine, for an yellowness index (YI after retention) and a viscosity average molecular weight (Mv after retention). The thermal stability of the obtained test piece was evaluated by ΔYI (yellowness difference index: difference between YI after retention and initial YI) and ΔMv (difference between Mv after retention and initial Mv).
YI was determined on the basis of JIS K 7103, by using COLOR-EYE manufactured by Macbeth.
Mv was calculated by the following equation, after a limiting viscosity [η] was obtained by determining a viscosity of methylene chloride solution at 20°C by using a Ubbelohde type viscometer.
$[\eta] = 1.23 \times 10^{-5} Mv^{0.83}$

(2) Total light ray transmittance (C light source) (%) and haze(%)

The test piece produced above was determined for a total light ray transmittance at the thickness of 5 mm or 2 mm in C light source and a haze at the thickness of 5 mm or 2 mm, by using DIGITAL HAZE COMPUTER (HGM-2DP, manufactured by SUGA TEST INSTRUMENTS CO., LTD.). Note that the total light ray transmittance was determined on the basis of JIS K 7361-1.

(3) Light ray transmittance (%)

The test piece obtained above was determined for a light ray transmittance in a region having a wavelength of 1,500 to 2,500 nm by using a self-recording spectrophotometer (UV-3100PC, manufactured by Shimadzu Corporation) and was evaluated from the maximum transmittance in the above wavelength region. Note that, in Examples 5 and 6, the light ray transmittance at a wavelength of 1,000 nm was further determined.
[Table 1]

Table 1

| | | | | Unit | Example 1 | Example 2 | Example 3 | Example 4 | Example 5 | Example 6 | Example 7 | Example 8 | Example 9 |
|---|---|---|---|---|---|---|---|---|---|---|---|---|---|
| | (A) Polycarbonate | A-1 | FN2200A | Part(s) by mass | 100 | 100 | 100 | 100 | 100 | 100 | 100 | 100 | 100 |
| | (B)ATO base | B-1 | FNDS874 (total amount) (ATO compounding amount) | Part(s) by mass | 0.3 0.075 | 0.3 0.075 | 0.3 0.075 | 0.3 0.075 | 0.3 0.075 | 0.18 0.045 | 0.71 0.178 | | |
| | (B) ITO base | B-2 | ITO dispersed PMMA (total amount) (ITO compounding amount) | Part(s) by mass | | | | | | | | 0.3 0.075 | 0.2 0.05 |
| | (C) Reactive silicone compound | C-1 | KR511 | Part(s) by mass | 0.1 | | 0.2 | 0.4 | 0.2 | 0.2 | 0.2 | 0.2 | 0.2 |
| | | | | | | | | | | | | | |
| | | C-2 D-1 | DC3037 ADK STAB PEP-36 | Part(s) by mass Part(s) by mass | 0.1 | 0.1 | 0.1 | 0.1 | 0.1 | 0.1 | 0.1 | 0.1 | 0.1 |

| | | | | Unit | Example 1 | Example 2 | Example 3 | Example 4 | Example 5 | Example 6 | Example 7 | Example 8 | Example 9 |
|---|---|---|---|---|---|---|---|---|---|---|---|---|---|
| compounding amount | (D) Antioxidant | D-2 | IRGRNOX 1076 | Part(s) by mass | 0.05 | 0.05 | 0.05 | 0.05 | 0.05 | 0.05 | 0.05 | 0.05 | 0.05 |
| | | D-4 | JC263 | Part(s) by mass | | | | | | | | 0.4 | 0.4 |
| | (E) Ultraviolet absorber | E-1 | Kemisorb 79 | Part(s) by mass | | | 0.25 | 0.25 | 0.25 | 0.25 | 0.25 | | |
| | (F) Lanthanum hexaboride-containing heat ray shielding material | F-1 | KHDS-06 | Part(s) by mass | | | | | 0.015 | 0.09 | | | |
| | (G) Dye, pigment | G-1 | Diaresin Blue G | Mass ppm | | | | | 10 | 8.1 | | | |
| | | G-2 | Diaresin Blue N | Mass ppm | | | | | | 8 6.6 | | | |
| | | G-3 | Sumika Color D4002PR | Mass ppm | | | | | | 3.5 | | | |
| | | G-4 | Mitsubishi Carbon M-100 | Mass ppm | | | | | 9.5 | 14 | | | |
| | Initial YI | | | | 5.4 | 6.1 | 5.1 | 4.8 | -3 | -2.65 | -2.58 | -2.1 | -1.3 |
| | YI after retention | | | | 9.7 | 10.1 | 11.6 | 11.2 | 4 | 3.5 | 3.2 | 2.5 | 2.1 |
| | ΔYI | | | | 3.3 | 4 | 6.5 | 6.4 | 7 | 6.15 | 5.78 | 4.6 | 3.4 |
| | Initial molecular weight | | | | 21,000 | 20,800 | 20,800 | 20,800 | 21,000 | 21,100 | 21,000 | 21,200 | 21,300 |
| | Molecular weight after retention | | | | 20,400 | 20,100 | 20,300 | 19,700 | 20,300 | 20,500 | 20,300 | 19,200 | 19,400 |

EP 2 009 057 B1

(continued)

| | | Unit | Example 1 | Example 2 | Example 3 | Example 4 | Example 5 | Example 6 | Example 7 | Example 8 | Example 9 |
|---|---|---|---|---|---|---|---|---|---|---|---|
| Evaluation | ΔMv | | 600 | 700 | 500 | 1,100 | 700 | 600 | 700 | 1,000 | 900 |
| | Thickness (mm) | | 5 | 5 | 5 | 5 | 5 | 5 | 2 | 5 | 5 |
| | Total light ray transmittance (C light source) (%) | | 74.7 | 74.5 | 74.7 | 74.8 | 20 | 20 | 78.4 | 78.2 | 81.6 |
| | Haze (%) | | 1.4 | 1.8 | 1.3 | 1.3 | 2.6 | 2.4 | 1.0 | 3.6 | 2.5 |
| | Maximum transmittance in 1,500 to 2,500 nm (%) | | 7.9 | 7.9 | 7.9 | 7.9 | 4.1 | 15.2 | 12.8 | 0.5 | 12 |
| | Light ray transmittance at 1,000 nm (%) | | | | | | 4.6 | 15 | | | |

[Table 2]

Table 2

| | Code | Material | Unit | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|
| (A) Polycarbonate | A-1 | FN2200A | Part(s) by mass | 100 | 100 | 100 | 100 | 100 | 100 | 100 | 100 |
| (B) ATO base | B-1 | FMDS874 (total amount) | Part(s) by mass | 0.3 | 0.3 | 0.3 | | | | | |
| | | (ATO compounding amount) | Part(s) by mass | 0.075 | 0.075 | 0.075 | | | | | |
| | B-3 | I-1 (ATO powder) | Part(s) by mass | | | | 0.075 | | | | |
| | | monoglyceride stearate | Part(s) by mass | | | | 0.15 | | | | |
| | B-4 | I-1 (ATO powder) | Part(s) by mass | | | | | | 0.075 | | |
| | B-5 | ATO dispersion liquid (ATO compounding amount) | Part(s) by mass | | | | | | | | 0.075 |
| (B) ITO base | B-6 | ITO dispersion liquid (ITO compounding amount) | Part(s) by mass | | | 1.5 | | | | | |
| (C) Reactive silicone compound | C-1 | KR511 | Part(s) by mass | | | | | 0.2 | 0.2 | 0.2 | 0.2 |
| | C-3 | FZ3517 | Part(s) by mass | | 0.1 | | | | | | |

compounding amount

| | | | | Unit | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|
| | (D) Antioxidant | D-1 | ADK STAB PEP-36 | Part(s) by mass | 0.1 | 0.1 | | | 0.1 | 0.1 | 0.1 | 0.1 |
| | | D-2 | IRGANOX 1076 | Part(s) by mass | 0.05 | 0.05 | 0.05 | 0.05 | 0.05 | 0.05 | 0.05 | 0.05 C |
| | | D-3 | IRGAFOS 168 | Part(s) by mass | | | 0.1 | 0.1 | | | | |
| | | D-4 | JC263 | Part(s) by mass | | | | | | | | |
| | (E) Ultraviolet absorber | E-1 | Kemisorb 79 | Part(s) by mass | | | 0.25 | 0.25 | 0.25 | 0.25 | 0.25 | 0.4 |
| Evaluation | Initial YI | | | | 9.4 | 45.3 | | 7.2 | 1.2 | 6.2 | 4.3 | 1.2 |
| | YI after retention | | | | 23.4 | 46.1 | *1 | 23 | 4.9 | 13.2 | 10.5 | |
| | ΔYI | | | | 14 | 0.8 | | 15.8 | 3.7 | 7 | 5.2 | 15.2 14 |
| | Initial molecular weight | | | | 21,000 | 21,000 | 18,500 | 20,400 | 21,200 | 21,000 | 20,800 | 21,100 |
| | Molecular weight after retention | | | | 19,000 | 20,000 | 15,200 | 18,100 | 20,500 | 20,300 | 19,500 | 19,500 |
| | ΔMv | | | | 1,500 | 1,000 | 3,300 | 2,300 | 700 | 700 | 1,300 | 1,600 |
| | Thickness (mm) | | | | 5 | 5 | 5 | 5 | 5 | 5 | 5 | 5 |
| | Total light ray transmittance (C light source) (%) | | | | 74.5 | 55.8 | | 73.8 | 89.8 | 70.9 | | |
| | Haze (%) | | | | 1.6 | 40 | *1 | 7.6 | 1.6 | 28.5 | 70.9 7.5 | 77.2 6.5 |
| | Maximum transmittance in 1,500 to 2,500 nm (%) | | | | 7.9 | 7.9 | | 7.9 | 84.5 | 4.5 | 4.5 | 3.5 |

*1: the value could not be determined due to generation of too much silver.

Industrial Applicability

A polycarbonate resin composition and a molded plate obtained therefrom according to the present invention shield a mid-infrared region, are excellent in transparency and thermal stability, and can be effectively utilized as a building material (exterior), a resin window, and a window part for electrical and electronic uses.

## Claims

1. A polycarbonate resin composition, comprising:

   100 parts by mass of a polycarbonate (A) as a reference value;
   0.03 to 1 part by mass of fine particles having an average primary particle diameter of 0.001 to 0.15 $\mu$m of antimony-doped tin oxide (ATO) treated with a polymeric dispersant and/or fine particles having an average primary particle diameter of 0.001 to 0.15 $\mu$m of tin-doped indium oxide (ITO) treated with a polymeric dispersant (B) with respect to 100 parts by mass of the polycarbonate (A); and
   0.03 to 1 part by mass of a reactive silicone compound having one or more alkoxy groups and a phenyl group in a molecule thereof (C) with respect to 100 parts by mass of the polycarbonate (A).

2. The polycarbonate resin composition according to claim 1, further comprising 0.0001 to 1 part by mass of an antioxidant (D) with respect to 100 parts by mass of the polycarbonate (A).

3. The polycarbonate resin composition according to claim 1 or 2, further comprising 0.0001 to 1 part by mass of an ultraviolet absorber (E) with respect to 100 parts by mass of the polycarbonate (A).

4. The polycarbonate resin composition according to any one of claims 1 to 3, further comprising 0.001 to 0.1 part by mass of a lanthanum hexaboride-containing heat ray shielding material (F) with respect to 100 parts by mass of the polycarbonate (A).

5. A molded plate, which is formed by subjecting the polycarbonate resin composition according to any one of claims 1 to 3 to an injection molding or an extrusion molding.

6. The molded plate according to claim 5, wherein the molded plate comprises a light ray transmittance determined by the use of a test piece having diameter thickness of 5 mm or 2mm of less than 20% in a region having a wavelength of 1, 500 to 2, 500 nm and a haze determined by the use of a test piece having diameter thickness of 5 mm or 2mm of less than 5%.

7. The molded plate according to claim 5 or 6, wherein the molded plate comprises a total light ray transmittance (C light source) determined by the use of a test piece having diameter thickness of 5 mm or 2mm of 15% or more.

8. A molded plate, which is formed by subjecting the polycarbonate resin composition according to claim 4 to an injection molding or an extrusion molding,
   wherein the molded plate comprises a light ray transmittance determined by the use of a test piece having diameter thickness of 5 mm or 2mm of less than 20% in a region having a wavelength of 1, 500 to 2,500 nm, a light ray transmittance determined by the use of a test piece having diameter thickness of 5 mm or 2mm of less than 20% in a region having a wavelength of 1,000 nm, and a haze determined by the use of a test piece having diameter thickness of 5 mm or 2mm of less than 5%.

9. The molded plate according to claim 8, wherein the molded plate comprises a total light ray transmittance (C light source) determined by the use of a test piece having diameter thickness of 5 mm or 2mm of 15% or more.

## Patentansprüche

1. Polycarbonatharzzusammensetzung, umfassend:

   100 Gewichtsteile eines Polycarbonats (A) als Referenzwert;
   0,03 bis 1 Gewichtsteil Feinpartikel mit einem durchschnittlichen primären Partikeldurchmesser von 0,001 bis

0,15 μm aus Antimondotiertem Zinnoxid (ATO), das mit einem polymeren Dispergiermittel behandelt ist, und/oder Feinpartikel mit einem durchschnittlichen primären Partikeldurchmesser von 0,001 bis 0,15 μm aus Zinndotiertem Indiumoxid (ITO), das mit einem polymeren Dispergiermittel (B) behandelt ist, bezogen auf 100 Gewichtsteile des Polycarbonats (A); und

0,03 bis 1 Gewichtsteil einer reaktiven Silikonverbindung (C) mit einer oder mehr Alkoxygruppen und einer Phenylgruppe in einem Molekül, bezogen auf 100 Gewichtsteile des Polycarbonats (A).

**2.** Polycarbonatharzzusammensetzung nach Anspruch 1 , darüber hinaus umfassend 0,0001 bis 1 Gewichtsteil eines Antioxidans (D), bezogen auf 100 Gewichtsteile des Polycarbonats (A).

**3.** Polycarbonatharzzusammensetzung nach Anspruch 1 oder 2, darüber hinaus umfassend 0,0001 bis 1 Gewichtsteil eines Ultraviolettabsorbers (E), bezogen auf 100 Gewichtsteile des Polycarbonats (A).

**4.** Polycarbonatharzzusammensetzung nach einem der Ansprüche 1 bis 3, darüber hinaus umfassend 0,001 bis 0,1 Gewichtsteile eines Lanthanhexaborid enthaltenden Wärmestrahlenschutzmaterials (F), bezogen auf 100 Gewichtsteile des Polycarbonats (A).

**5.** Geformte Platte, die erhalten wird durch Durchführung eines Spritzformens oder eines Extrusionsformens mit der Polycarbonatharzzusammensetzung nach einem der Ansprüche 1 bis 3.

**6.** Geformte Platte nach Anspruch 5, wobei die geformte Platte eine Lichtstrahlendurchlässigkeit, bestimmt durch Verwendung eines Teststücks mit einer Durchmesserdicke von 5 mm oder 2 mm, von weniger als 20 % im Bereich mit einer Wellenlänge von 1.500 bis 2.500 nm und eine Trübung, bestimmt durch Verwendung eines Teststücks mit einer Durchmesserdicke von 5 mm oder 2 mm, von weniger als 5 % umfasst.

**7.** Geformte Platte nach Anspruch 5 oder 6, wobei die geformte Platte eine Gesamtlichtstrahlendurchlässigkeit (C Lichtquelle), bestimmt unter Verwendung eines Teststücks mit einer Durchmesserdicke von 5 mm oder 2 mm, von 15 % oder mehr aufweist.

**8.** Geformte Platte, welche durch Durchführung eines Spritzformens oder eines Extrusionsformens mit der Polycarbonatharzzusammensetzung nach Anspruch 4 geformt wird, wobei die geformte Platte eine Lichtstrahlendurchlässigkeit, bestimmt unter Verwendung eines Teststücks mit einer Durchmesserdicke von 5 mm oder 2 mm, von weniger als 20 % in einem Bereich mit einer Wellenlänge von 1.500 bis 2.500 nm, eine Lichtstrahlendurchlässigkeit, bestimmt unter Verwendung eines Teststücks mit einer Durchmesserdicke von 5 mm oder 2 mm, von weniger als 20 % in einem Bereich mit einer Wellenlänge von 1.000 nm, und eine Trübung, bestimmt unter Verwendung eines Teststücks mit einer Durchmesserdicke von 5 mm oder 2 mm, von weniger als 5 % umfasst.

**9.** Geformte Platte nach Anspruch 8, wobei die geformte Platte eine Gesamtlichtstrahlendurchlässigkeit (C Lichtquelle), bestimmt unter Verwendung eines Teststücks mit einer Durchmesserdicke von 5 mm oder 2 mm, von 15 % oder mehr umfasst.

## Revendications

**1.** Composition de résine polycarbonate comprenant :

100 parts massiques d'un polycarbonate (A) en tant qu'une valeur de référence ;
0,03 à 1 part massique de particules fines ayant un diamètre de particule primaire moyen de 0,001 à 0,15 μm d'oxyde d'étain doté d'antimoine (OEA) traité avec un dispersant polymérique et/ou de particules fines ayant un diamètre de particule primaire moyen de 0,001 à 0,15 μm d'oxyde d'indium doté d'étain (OIE) traité avec un dispersant polymérique (B) par rapport à 100 parts massiques du polycarbonate (A) ; et
0,03 à 1 part massique d'un composé de silicone réactif ayant un ou plusieurs groupes alkoxy et un groupe phényle dans une molécule de celui-ci (C) par rapport à 100 parts massiques du polycarbonate (A).

**2.** Composition de résine polycarbonate selon la revendication 1, comprenant en outre 0,0001 à 1 part massique d'un antioxydant (D) par rapport à 100 parts massiques du polycarbonate (A).

**3.** Composition de résine polycarbonate selon la revendication 1 ou 2, comprenant en outre 0,0001 à 1 part massique d'un absorbeur d'ultraviolet (E) par rapport à 100 parts massiques du polycarbonate (A).

4. Composition de résine polycarbonate selon l'une quelconque des revendications 1 à 3, comprenant en outre 0,001 à 0,1 part massique d'un matériau d'écran de protection contre les rayonnements de chaleur contenant d'hexaboride de lanthane (F) par rapport à 100 parts massiques du polycarbonate (A).

5. Plaque moulée qui est formée par mettre en ouvre un moulage par injection ou un moulage par extrusion avec la composition de résine polycarbonate selon l'une quelconque des revendications 1 à 3.

6. Plaque moulée selon la revendication 5, dans laquelle la plaque moulée comprend une transmittance de rayon lumineux déterminée par l'utilisation d'un échantillon ayant une épaisseur diamètrique de 5 mm ou de 2 mm inférieure à 20 % dans une région ayant une longueur d'onde de 1.500 à 2.500 nm et une brume déterminée par l'utilisation d'un échantillon ayant une épaisseur diamètrique de 5 mm ou de 2 mm inférieure à 5 %.

7. Plaque moulée selon la revendication 5 ou 6, dans laquelle la plaque moulée comprend une transmittance de rayon lumineux (origine de lumière C) déterminée par l'utilisation d'un échantillon ayant une épaisseur diamètrique de 5 mm ou de 2 mm de 15 % ou plus.

8. Plaque moulée, qui est formée par mettre en ouvre un moulage par injection ou un moulage par extrusion avec la composition de résine polycarbonate selon la revendication 4,
dans laquelle la plaque moulée comprend une transmittance de rayon lumineux déterminée par l'utilisation d'un échantillon ayant une épaisseur diamètrique de 5 mm ou de 2 mm inférieure à 20 % dans une région ayant une longeur d'onde de 1.500 à 2.500 nm, une transmittance de rayon lumineux déterminée par l'utilisation d'un échantillon ayant une épaisseur diamètrique de 5 mm ou de 2 mm inférieure à 20 % dans une région ayant une longueur d'onde de 1.000 nm, et une brume déterminée par l'utilisation d'un échantillon ayant une épaisseur diamètrique de 5 mm ou de 2 mm inférieure à 5 %.

9. Plaque moulée selon la revendication 8, dans laquelle la plaque moulée comprend une transmittance de rayon lumineux totale (origine de lumière C) déterminée par l'utilisation d'un échantillon ayant une épaisseur diamètrique de 5 mm ou de 2 mm de 15 % ou plus.

**EP 2 009 057 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000234066 A
- JP 2000178428 A
- JP 2003277045 A
- JP 2003327717 A